# EUROPÄISCHE PATENTSCHRIFT

(11) **EP 0 543 971 B1**
(45) Veröffentlichungstag und Bekanntmachung des Hinweises auf die Patenterteilung: **14.12.1994**
(21) Anmeldenummer: 92912362.8
(22) Anmeldetag: 05.06.1992
(51) Int. Cl.: G01B 11/27

(54) **VERFAHREN UND VORRICHTUNG ZUM FESTSTELLEN DER KRÜMMUNGSMITTELACHSE**
PROCESS AND DEVICE FOR DETERMINING THE CENTRE-LINE OF A CUVRATURE
PROCEDE ET DISPOSITIF DE DETERMINATION DE LA LIGNE MEDIANE D'UNE COURBURE

(30) Priorität: 13.06.1991 DE 4119445
(43) Veröffentlichungstag der Anmeldung: 02.06.1993
(73) Patentinhaber: PRÜFTECHNIK DIETER BUSCH AG, 85737 Ismaning (DE)
(72) Erfinder: BUSCH, Dieter, D-8045 Ismaning (DE); FOLEY, David, D-8000 München 40 (DE)
(74) Vertreter: Hieke, Kurt
(86) Internationale Anmeldenummer: EP9201269
(87) Internationale Veröffentlichungsnummer: WO9222784

(56) Entgegenhaltungen:
- EP-A- 0 040 648
- DE-A- 3 320 163
- US-A- 4 319 406
- Feinwerktechnik + Messtechnik, Bd. 89, Nr. 6, September 1981, DE, Seiten 261-265, Pfeifer et al: "Zur Messunsicherheit von Fluchtungsmesssystemen auf Laserbasis"
- Feingerätetechnik, Bd. 32, Nr. 5, 1983, Berlin, DE, Seiten 209-210, Drenckhan et al: "Laser-Geradheits-Messsystem mit symmetrisiertem Strahlengang"

## Beschreibung

Die Erfindung bezieht sich auf ein Verfahren gemäß dem einleitenden Teil des Patentanspruchs 1, ferner auf ein unter Anwendung dieses Verfahrens durchführbares Verfahren zum gegenseitigen Ausrichten von Körperflächen gemäß dem einleitenden Teil des Patentanspruchs 4 und auf ein Distanzstück mit einem zweiachsigen photoelektronischen Positionsdetektor zum Durchführen dieser Verfahren.

Beispielsweise bei der Montage von Turbinen müssen die Kränze der Turbinenleiträder vor der Befestigung der Leitschaufeln an ihnen bezüglich der Längsachse der Turbine bzw. der Rotordrehachse sehr genau so ausgerichtet werden, daß ihre Längsachse, d.h. die Krümmungsmittelachse der die zentrale Kranzöffnung umgebenden, in der Regel zylindrischen Wandung, mit dieser fluchtet. Die die Bezugsachse darstellende Turbinenlängsachse ist durch die zylindrischen Lagerflächen des Turbinenrotors vorgegeben, mit deren Krümmungsmittelachsen sie zusammenfällt. Die im Stator der Turbine vorhandenen stirnseitigen Anlageflächen für die Leitradkränze erstrecken sich in zu der Turbinenlängsachse senkrechten Ebenen, und die Leitradkränze müssen bei der Montage am Turbinenstator durch Verschieben in radialer Richtung entlang der Anlageflächen in die geradialer Richtung entlang der Anlageflächen in die gewünschte Fluchtposition der Krümmungsmittelachse ihrer zentralen Öffnung mit der Bezugsachse gebracht und in diesem Zustand dann im Stator fixiert werden. Für die Justierung werden Hilfsmittel eingesetzt, die eine definierte Verschiebung in radialer Richtung entlang der Stator-Anlagefläche ermöglichen. Bei der Montage wird so vorgegangen, daß der jeweilige Leitradkranz zunächst in eine geschätzte Position möglichst nahe bei der zu erreichenden Fluchtposition gebracht wird, dann nach Größe und Richtung der Abstand festgestellt wird, den die Krümmungsmittelachse von der Bezugsachse noch aufweist, dann mittels der Justierhilfen eine dem Meßergebnis entsprechende Korrektur vorgenommen wird und dieser Vorgang ggf. so oft wiederholt wird, bis der Abstand zu Null geworden ist bzw. einen tolerierbaren Minimalwert nicht mehr überschreitet.

Verfahren gemäß dem einleitenden Teil des Patentanspruchs 1 ermöglichen die Feststellung des Abstandes der Krümmungsmittelachse einer kegelmantelartig gebogenen konkaven Körperfläche von einer durch einen Lichtstrahl kleinen Durchmessers, insbesondere von einem Laserstrahl, vorgegebenen Bezugsachse.

Bei einem bekannten Verfahren dieser Art (DE-Z.: Feinwerktechnik & Meßtechnik, 89. Jahrgang, Heft 6, Sept. 1981, S. 262) wird der Positionsdetektor um eine zur Krümmungsmittelachse der Körperfläche im wesentlichen parallele Achse gedreht, wofür er in einem auf die Körperfläche aufsetzbaren, bei der Messung darauf ortsfest stehen bleibenden Dreifuß drehbar gelagert ist. Mit dem Positionsdetektor ist starr ein sich radial zur Drehachse erstreckender Arm mit einem elektronischen Taster verbunden, der sich mit dem Positionsdetektor dreht und dabei mit seiner Spitze entlang der Körperfläche in deren Krümmungsrichtung bewegt. Der Taster erzeugt ein elektrisches Signal, das den Abstand der Tasterspitze von der Drehachse im Dreifuß wiedergibt. Der Dreifuß ist so bemessen, daß sich die Drehachse für den Taster und den Positionsdetektor nahe bei der Krümmungsmittelachse der Körperfläche, die z.B. die Innenfläche eines Rohres sein kann, befindet. Aus der Differenz aus dem Tastersignal und dem Positionsdetektorsignal, die bei der Drehung dauernd erfaßt werden, kann auf die Rohrverdrückung und die Rohrlage geschlossen werden. Die drehbare Lagerung des Positionsdetektors und des elektronischen Tasters am Dreifuß bedingt mechanische Toleranzen, die in die Abstandsmessung mit eingehen und diese verfälschen. Hinzu kommt, daß die aus dem Dreifuß und der darin drehbar gelagerten Einheit aus dem Positionsdetektor und dem elektronischen Taster bestehende, zur Durchführung des bekannten Verfahrens benötigte Vorrichtung baulich aufwendig und kostspielig ist. Überdies werden bei dem bekannten Verfahren der Positionsdetektor und der elektronische Taster über einen vollen Winkel von 360° gedreht, um die die Rohrlage festzustellen.

Es ist auch bekannt, die Bezugsachse bei der Turbinenmontage mittels eines unter starker Spannung stehenden Stahl drahtes oder dgl. vorzugeben, der zwischen in die Lagerflächen der Rotorlager eingepaßten Halterungen genau in der Flucht von deren Krümmungsmittelachse ausgespannt wurde. Die Herstellung der Spannvorrichtungen mit ihren genau zu den Rotorlagerflächen passenden Zentrierflächen und der genau zentralen Führungseinrichtung für den Draht erforderte bereits für sich einen erheblichen Aufwand. Hinzu kommt, daß die die Bezugsachse vorgebende gespannte Saite bei der gewöhnlich gegebenen horizontalen Lage der Turbinenlängsachse zu einem Durchhang neigt, der die Messung in einem unzulässigen Ausmaß verfälschen kann. Bei der Vermessung mußte auch sorgfältig darauf geachtet werden, daß die gespannte Saite nicht zur Seite ausgelenkt wird, was auch bei starker Spannung schon mit einem relativ leichten Druck eintreten kann. Die Vermessung und Justierung des jeweiligen Leitradkranzes wurde dann so durchgeführt, daß mit üblichen mechanischen Längenmessern für in Krümmungsrichtung im Abstand hintereinander liegende Punkte auf der Wandung der Leitkranzöffnung deren Abstand zur gespannten Saite festgestellt und aus dem Meßergebnis auf die Lage der Krümmungsmittelachse bezüglich der Bezugsachse, d.h. der gespannten Saite, geschlossen wurde, danach eine entsprechende Lagekorrektur des Leitradkranzes bezüglich des Stators mit den Justierhilfen durchgeführt wurde und der Vorgang so lange wiederholt wurde, bis sich für die Meßpunkte ein untereinander gleicher Abstand zur gespannten Saite ergab, woraufhin der Leitkranz endgültig am Stator fixiert wurde. Dieser Vorgang war sehr zeitraubend und mußte, wie bereits gesagt, unter Beachtung sehr großer Sorgfalt durchgeführt werden.

Gemäß DE-Z.: Feingerätetechnik, 32 (1983) 5, S. 209 und 210, ist es auch bekannt, bei Fluchtungsmeßsystemen auf Laserbasis einen Positionsdetektor starr auf einer im wesentlichen ebenen Fläche abzustützen und mit der Abstützung entlang der Ebene zu bewegen, so daß der Positionsdetektor Unebenheiten der Fläche folgt.

Der Erfindung liegt die Aufgabe zugrunde, ein Verfahren gemäß dem Oberbegriff des Patentanspruchs 1 zu schaffen, das mit insbesondere hinsichtlich ihres mechanischen Aufbaus einfachen Mitteln sehr bequem und schnell durchführbar ist und hochhgenaue Ergebnisse liefert, selbst wenn der Positionsdetektor mit seiner Meßfläche nur über einen verhältnismäßig kleinen Teil eines Vollwinkels gedreht wird.

Die vorstehende Aufgabe wird durch die Merkmale des Patentansprüchs 1 gelöst. Die Patentansprüche 2 und 3 betreffen bevorzugte Ausgestaltungen des Verfahrens nach Patentanspruch 1.

Dadurch, daß bei dem Verfahren gemäß Anspruch 1 der Positionsdetektor beim Drehen starr an dem Distanzstück befestigt ist und dieses entlang der Körperfläche kippsicher geführt verschoben wird, gehen in die Messung keinerlei mechanische Toleranzen ein, die das Meßergebnis verfälschen könnten. Darüber hinaus reicht eine Drehung des Meßfeldes über nur einen Teil eines Vollwinkels aus, den Abstand, den die Krümmungsmittelachse von der Bezugsachse aufweist, präzise zu ermitteln. Der Umstand, daß das Distanzstück zur Erzielung einer solchen nur teilweisen Drehung des Meßfeldes offensichtlich ebenfalls nur über einen Teilbereich der Körperfläche in Umfangsrichtung verschoben werden muß, erleichtert die Durchführung des Verfahrens in vielen Fällen erheblich.

Der Erfindung liegt des weiteren die Aufgabe zugrunde, ein Verfahren zum Ausrichten mehrerer hintereinander angeordneter Körperflächen gemäß dem einleitenden Teil des Patentanspruchs 4 zu schaffen, das unter Anwendung des Verfahrens gemäß Anspruch 1 durchführbar ist und zum Erreichen des Fluchtungszustandes der Körperflächen schneller als bisher und mit einem optimal geringen Arbeitsaufwand herbeiführbar ist.

Diese weitere Aufgabe der Erfindung wird durch die Merkmale des Patentanspruchs 4 gelöst.

Dem Verfahren gemäß Patentanspruch 4 liegt die Erkenntnis zugrunde, daß es für die Praxis nicht darauf ankommt, daß der Fluchtungszustand bezüglich einer von vornherein im Raume festgelegten Bezugsachse erreicht wird, sondern nur darauf, daß die Krümmungsmittelachsen der Körperflächen überhaupt fluchten, selbst wenn die letztliche Fluchtachse gegenüber der ursprünglich vorgegebenen Bezugsachse eine gewisse Ablage hat, sodaß die Fluchtachse bzw. die entsprechenden Daten für die an den einzelnen Körpern im Zusammenhang mit dieser vorzunehmenden Korrekturverschiebungen so berechnet werden können, daß der Fluchtungszustand mit einer geringstmöglichen Gesamtverschiebung der zugehörigen Körper und damit schneller und bequemer als bisher erreicht wird.

Gegenstand der Erfindung ist auch eine zum Durchführen des erfindungsgemäßen Verfahrens geeignete Tastvorrichtung. Diese ist im Patentanspruch 5 gekennzeichnet. Die Patentansprüche 6 bis 13 betreffen bevorzugte Ausführungsformen der Vorrichtung gemäß Anspruch 5.

Das erfindungsgemäße Verfahren eignet sich nicht nur zur Vermessung von Leidradkränzen mit zylindrischer zentraler Öffnung, sondern allgemein zur Feststellung des Abstandes, den eine konkave, kegelmantelartig gekrümmte Fläche, z.B. eine zylindrische oder teilzylindrische Fläche als Sonderform eines Kegels oder Teilkegels mit im Unendlichen liegendem Scheitelwinkel vom Wert Null, von einer Bezugsachse aufweist.

Da eine Kreislinie -auf die in Krümmungsrichtung hintereinander liegende Punkte bei einer Kegelmantelfläche fallenbekanntlich durch drei Punkte in einem ebenen Koordinatensystem eindeutig definiert ist, genügt es, auch wenn der Radius der Kreislinie nicht bekannt ist, bei dem erfindungsgemäßen Verfahren prinzipiell, die Positionssignale des Positionsdetektors nur in drei einen gegenseitigen Winkelabstand aufweisenden Winkelpositionen zu erfassen und nur für eine dieser Winkelpositionen deren Lage im Raume festzustellen, um den Abstand der Krümmungsmittelachse von der Bezugsachse nach Größe und Richtung errechnen zu können. Hierbei können mathematische Optimierungsverfahren zuhilfe genommen werden. Durch Vermessung von mehr als drei Punkten kann die Genauigkeit noch gesteigert werden. Auch ein kontinuierliches Abfahren der Kegelmantelfläche in Umfangssrichtung ist möglich.

Wenn der Radius des Kreislinie, entlang welcher die Vermessung vorgenommen wird, bekannt ist, genügt prinzipiell die Signalerfassung in zwei Winkelpositionen des Positionsdetektors bei bekannter räumlicher Orientierung einer von diesen.

Die Erfindung wird nachstehend an einem Beispiel anhand der Zeichnung noch näher erläutert.

In der Zeichnung zeigt jeweils in schematischer Darstellung:

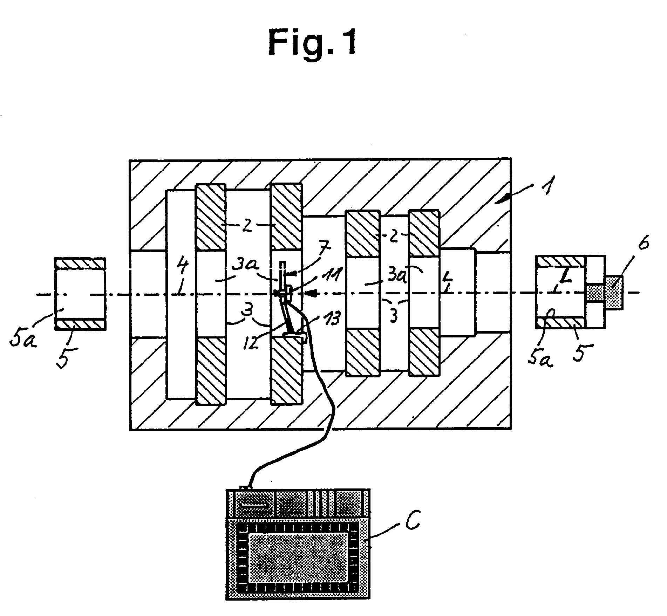

- Fig. 1: einen Turbinenstator mit Leitradkränzen und Rotorlagern im axialen Längsschnitt, wobei auch eine Tastvorrichtung mit Distanzstück und Positionsdetektor, sowie ein Strahlsender zum Aussenden eines Laserstrahls als Bezugsachse für die Abstandsmessung nach dem erfindungsgemäßen Verfahrens bei der Vermessung eines Leitradkranzes und ein von der Tastvorrichtung her mit Meßdaten gespeister Computer dargestellt sind, und

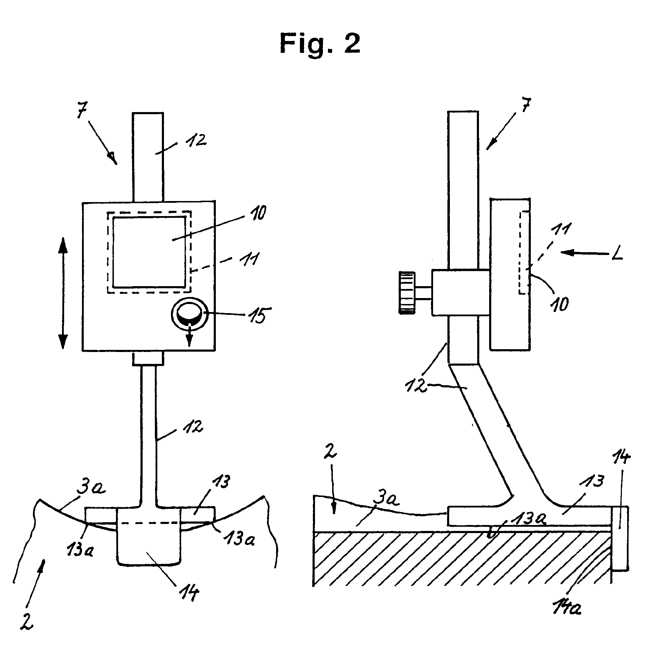

- Fig. 2: die bei der fluchtrechten Montage der Turbine gemäß Fig. 1 zur Durchführung des erfindungsgemäßen Verfahrens eingesetzte Tastvorrichtung links in Vorderansicht bei Betrachtung in Richtung des Lichtstrahls und rechts in Seitenansicht senkrecht dazu.

Die Fig. 1 zeigt im axialen Längsschnitt einen Turbinenstator 1, in dem Leitradkränze 2 sowie beiderseitige Turbinenrotorlager 5 so zu justieren sind, daß die Krümmungsmittellinien der zylindrischen Wandungen 3a der Mittelöffnungen 3 der Leitradkränze 2 und die Krümmungsmittelachsen der zylindrischen Lagerflächen 5a der Turbinenrotorlager 5 untereinander fluchten. An dem rechts in Fig. 1 zu sehenden Rotorlager 5 ist ein Lichtstrahlsender 6 montiert, der einen scharf gebündelten Lichtstrahl L kleiner Divergenz, vorzugsweise einen Laserstrahl, durch den von den Öffnungswandungen 3a der Leitradkränze 2 umschlossenen Meßraum ungefähr parallel zur endgültigen, noch genau einzurichtenden Rotordrehachse 4 und nahe bei dieser aussendet. Wie bei dem in Fig. 1 zweiten Leitradkranz 2 von links dargestellt, fällt der Lichtsstrahl L, der eine Bezugsachse für die Vermessung vorgibt, bei der einzelnen Vermessung der zylindrischen Körperflächen 3a auf eine Tastvorrichtung 7, die in diesem Leitradkranz 2 an dessen Wandung 3a in einer weiter unten noch näher erläuterten Weise abgestützt und dieser entlang verschiebbar ist. Die Tastvorrichtung 7 erzeugt elektrische Signale, die die Lage des Lichtstrahlauftreffpunktes auf ihr kennzeichnen, und liefert diese an einen Computer C, der aus diesen Signalen und aus der für mindestens ein solches Signal gesondert ermittelten, ebenfalls als elektrisches Signal (Winkelsignal) in ihn eingegebenen Winkelposition, die die Tastvorrichtung 7 bei dessen Entstehen einnimmt, programmgesteuert den Abstand der Krümmungsmittelachse der Öffnungswandung 3a dieses Leitradkranzes 2 von der Bezugslinie 4 errechnet. Die Abstandssignale erhält der Computer C ggf. zusammen mit weiteren elektrischen Signalen von der Tastvorrichtung 7.

Die Tastvorrichtung 7 ist gemäß Fig. 2 mit einem ein zweiachsiges Meßfeld 10 aufweisenden photoelektronischen Positionsdetektor 11 versehen, der an einem starren Distanzstück 12, hier einstellbar, in einem bekannten Abstand von einem Ende von diesem derart befestigt ist, daß der Lichtstrahl L auf das Meßfeld 10 fällt. An dem vorgenannten Ende ist das Distanzstück 12 mit Mitteln 13 zum kippfesten gleitbaren Abstützen an der Wandung 3a der zentralen Leitkranzöffnung 3 versehen, wobei es durch diese Mittel 13 sowie durch weitere Mittel 14 bezüglich der Wandung 3a in einer solchen Position gehalten wird, daß das Meßfeld 10 des Positionsdetektors 11 senkrecht zur Krümmungsmittelachse dieser Wandung 3a ausgerichtet ist. Die Mittel 13 haben, wie dargestellt, im Abstand in Umfangsrichtung der Fläche 3a auf diese aufsetzbare, parallele, sich über eine gewisse Länge in deren Achsrichtung erstreckende Geitflächen 13a, und die Mittel 14 weisen eine weitere Gleitfläche 14a auf, die an der Stirnseite des Körpers bzw. Leitkranzes 2 kippsicher abstützbar ist und von dieser geführt wird, da sich diese Stirnseite beim Ausführungsbeispiel parallel zur Krümmungsrichtung der Körperfläche 3a erstreckt. Diese letzgenannte Gleitfläche kann auch magnetisch sein, damit sie an die stirnseitige Führungsfläche am Körper 2 herangezogen wird und mit dieser selbsttätig in Kontakt bleibt, wenn der Körper 2 aus ferromagnetischem Material besteht.

Die Tastvorrichtung 7 ist des weiteren mit einem Winkelmesser 15, hier in Form eines Lotes, versehen, der die augenblickliche Winkelposition des Meßfeldes 10 bezüglich der Vertikalen, also dessen Winkelposition bezüglich eines raumfesten Koordinatensystems, ermittelt und entsprechende elektrische Signale ebenfalls an den Computer C liefert.

Das Distanzstück 12 kann auch von veränderbarer Länge sein. In diesem Falle könnte der Positionsdetektor 11 auch unverrückbar an dem Distanzstück 12 befestigt sein.

Die Meßdaten werden vorzugsweise drahtlos von der Tastvorrichtung 7 zum Computer C übertragen, wofür die Tastvorrichtung 7 mit einem Sender und der Computer C mit einem Empfänger ausgerüstet ist (nicht dargestellt).

Die im Verlaufe der Vermessung eines Leitradkranzes 2 oder auch während der Vermessung mehrerer Leitradkränze anfallenden Abstandssignale und sonstigen Daten werden vorzugsweise bei der Tastvorrichtung 7 in einer nicht dargestellten Speichereinrichtung zwischengespeichert und nach Beendigung der Messung gesammelt übertragen.

Der Positionsdetektor 11 liefert elektrische Positionssignale an den Computer C, die der Lage des Lichtstrahlauftreffpunktes auf dem Meßfeld 10 entsprechen. Wenn das abgestützte Ende des Distanzstückes 12 in der Krümmungsrichtung der Wandung 3a im Kontakt mit dieser verschoben wird, dreht sich das Meßfeld 10 bei der Verlagerung der Abstützung des Distanzstückes 12 zwangsweise um die Krümmungsmittelachse der Wandung 3a, und der Lichtstrahlauftreffpunkt beschreibt um diese auf der Meßfläche 10 einen Kreis oder Kreisbogen. Wenn in mindestens drei verschiedenen Winkelpositionen des Meßfeldes 10 vom Positionsdetektor 11 gelieferte Positionssignale zusammen mit einem Winkelsignal für eines dieser Positionssignale erfaßt und in den Computer C eingegeben werden, hat dieser genügend Daten erhalten, um den Abstand der Bezugsachse bzw. des Lichtstrahls L von der Krümmungsmittelachse errechnen zu können, da ein Kreis durch drei auf ihm liegende Punkte eindeutig bestimmt ist. Wenn zudem für einen dieser Punkte auch noch die Winkellage des Meßfeldes bei seiner Erfassung bekannt ist, ist auch die räumliche Richtung des Abstandes angebbar. Prinzipiell reichen also drei Meßpunkte in Verbindung mit der bekannten räumlichen Winkelposition des Meßfeldes für einen von diesen für die eindeutige Errechnung des Abstandes der Krümmungsmittelachse von der Bezugsachse nach Größe und Richtung aus. Je mehr Meßpunkte umso genauer wird die Abstandsbestimmung. Vorzugsweise werden bei der Berechnung mathematische Optimierungsverfahren mit herangezogen.
Mit der Tastvorrichtung 7 nach Fig. 2 kann in Verbindung mit dem vom Lichtstrahlsender 6 in Fig. 1 ausgesendeten Lichtstrahl L das oben geschilderte erfindungsgemäße Verfahren der Abstandsbestimmung offensichtlich rasch, präzise und mühelos für jede der kegelmantelförmig bzw. zylindrisch gekrümmten Flächen 3a und auch für die Lagerflächen 5a durchgeführt werden, wofür nur ein verhältnismäßig kleiner Winkelbereich der jeweiligen Fläche mit Meßwertaufnahme an wenigen Meßpunkten prinzipiell abgefahren zu werden braucht.

Sind diese Abstände nach Größe und Richtung einmal festgestellt, können auch Korrekturmaßnahmen wertmäßig berechnet und durchgeführt werden, die ggf. zur Beseitigung dieser Abstände erforderlich sind. Hierbei wird vorzugsweise so vorgegangen, daß nicht die Bezugsachse von vornherein als Fluchtungsachse vorgegeben wird, sondern die Berchnung der Korrekturdaten auf eine Fluchtungsachse abstellt, die mit einer geringstmöglichen Gesamtverschiebung aller auszurichtenden Körperflächen erreicht werden kann. Diese Fluchtungsachse wird allerdings nahe bei der Bezugsachse liegen, da die Körperflächen vor der Vermessung nach dem erfindungsgemäßen Verfahren konstruktionsbedingt bereits weitgehend ausgerichtet sind und die noch vorzunehmenden Korrekturen im Bereich von mm und weniger liegen.

Es kann vorkommen, daß die zu vermessende konkave Körperfläche 3a, 5a von der exakten Form eines Kegelmantels oder eines Teiles eines solchen etwas abweicht. Das erfindungsgemäße Verfahren ermöglicht es, auch solche Abweichungen mittels eines entsprechenden Computerprogramms mit Hilfe des Computers und der Tastvorrichtung 7 festzustellen. In diesem Falle müssen nicht nur mindestens drei, sondern mindestens fünf von dem Positionsdetektor in unterschiedlichen Winkelpositionen gelieferte elektrische Signale erfaßt und in den Computer C eingegeben werden. Gegebenenfalls muß dann mittels des Winkelmessers auch zu mehr als einem dieser Signale die bei seiner Bildung gegebene raumbezogene Winkelposition des Meßfeldes 10 festgestellt und dem Computer C mitgeteilt werden.

## Patentansprüche

1. Verfahren zum Feststellen des Abstandes, den die Krümmungsmittelachse einer einem freien Meßraum zugewendeten, kegelmantelförmig gekrümmten, konkaven Körperfläche (3a,5a) von einer sich im wesentlichen parallel zu ihr erstreckenden Bezugsachse nach Größe und Richtung aufweist, insbesondere zum Feststellen des Abstandes der Längsmittelachse der zentralen Öffnung (3) in einem Turbinenleitradkranz (2) und/oder der Längsmittelachse der Lagerfläche (5a) eines Turbinenrotorlagers (5) von der Bezugsachse, und gegebenfalls zum Feststellen einer eventuellen Abweichung der Form der konkaven Körperfläche von der exakten Kegelmantelform, wobei
a) die Bezugsachse oder eine Hilfsachse, die zu dieser eine definierbare räumliche Lage aufweist und sich wenigstens ungefähr parallel zu deren Richtung erstreckt, im Meßraum mit einem Lichtstrahl (L) von kleinem Durchmesser, insbesondere einem Laserstrahl, dargestellt wird,
b) ein ein Meßfeld (10) aufweisender, zweiachsiger photoelektronischer Positionsdetektor (11) mittels eines kippsicher an der Körperfläche (3a,5a) abgestützten Distanzstückes (12) in eine Meßposition gebracht wird, in der sich sein Meßfeld (10) in einer zur Krümmungsmittelachse der konkaven Körperfläche 3a,5a) im wesentlichen senkrechten Meßebene erstreckt und der Lichtstrahl (L) auf das Meßfeld (10) fällt, und
c) der Posditionsdetektor (11) in der Meßposition um eine zur Krümmungsmittelachse der Körperfläche (3a,5a) im wesentlichen parallele Achse gedreht wird,
**dadurch gekennzeichnet,** daß
d) der Positionsdetektor (11) starr an dem Distanzstück (12) befestigt und dieses mit dem an der Körperfläche (3a,5a) abgestützten Ende dieser entlang in deren Krümmungsrichtung verschoben wird, sodaß der Positionsdetektor (11) mit seinem Meßfeld (10) zwangsweise um die Krümmungsmittelachse der konkaven Körperfläche (3a,5a) gedreht wird,
e) in mindestens drei verschiedenen, im Abstand voneinander befindlichen Drehstellungen des Meßfeldes (10) die von dem Positionsdetektor (11) gelieferten, für die zugehörige Lage des Lichtstrahlauftreffpunktes auf dem Meßfeld (10) kennzeichnenden elektrischen Positionssignale erfaßt werden,
f) für mindestens eine der Drehstellungen des Meßfeldes (10), in denen die Positionssignale erfaßt werden, und für das zugehörige Positionssignal die Winkelposition des Meßfeldes (10) in einem raumfesten Koordinatensystem festgestellt wird, und
g) auf der Grundlage, daß der Lichtstrahlauftreffpunkt beim Drehen des Positionsdetektors und des Meßfeldes auf diesem im wesentlichen eine zur Krümmungsmittelachse der konkaven Körperfläche (3a,5a) konzentrische Kreislinie beschreibt, aus den Positionssignalen und der/den festgestellten Winkelposition(en) im raumfesten Koordinatensystem -sowie gegebenfalls aus der bekannten Lage der Hilfsachse gegenüber der Bezugsachse- der Abstand zwischen der Bezugsachse und der Krümmungsmittelachse nach seiner Größe und seiner Richtung bezüglich des raumfesten Koordinatensystems errechnet wird.

2. Verfahren nach Anspruch 1, **dadurch gekennzeichnet,** daß die Errechnung des Abstandes mittels eines elektronischen Rechners (C) durchgeführt wird.

3. Verfahren nach Anspruch 1 oder 2, **dadurch gekennzeichnet,** daß die Positionssignale zwischengespeichert werden.

4. Verfahren zum Ausrichten mehrerer im Abstand hintereinander angeordneter, einem freien Meßraum zugeordneter, kegelmantelförmig gekrümmter konkaver Körperflächen (3a,5a), insbesondere der Lagerflächen (5a) eines Turbinenrotors und der Wandungen (3a) der zentralen Öffnungen (3) in den Leitradkränzen (2) der Turbine, in solcher Weise, daß ihre Krümmungsmittelachsen fluchten, unter Anwendung des Verfahrens nach einem der Ansprüche 1 bis 3, **dadurch gekennzeichnet,** daß für jede Fläche (3a,5a) der Abstand ihrer Krümmungsmittelachse von einer für alle Flächen (3a,5a) gemeinsam dargestellten Bezugsachse (L) nach Größe und Richtung festgestellt wird, aus den festgestellten Abständen die räumliche Lage einer allen Flächen (3a,5a) gemeinsamen Fluchtungsachse errechnet wird, in die die einzelnen Flächen (3a,5a) mit ihrer Krümmungsmittelachse bei kleinstmöglicher Gesamtverschiebung aller Flächen (3a,5a) eingestellt werden können, für jede Fläche (3a,5a) errechnet und zur Anzeige gebracht wird, wie weit und in welcher Richtung der zugehörige Körper (2) im Raume verschoben werden muß, um ihre Krümmungsmittelachse in die Flucht der Fluchtungsachse einzustellen, und die Körper (2) entsprechend den errechneten Daten eingestellt werden.

5. Tastvorrichtung (7) mit einem Mittel (13) zum kippsicheren Abstützen an einer kegelförmig gekrümmten, konkaven Körperfläche (3a,5a) aufweisenden starren Distanzstück (12) und mit einem an diesem angebrachten, ein zweiachsiges Meßfeld (10) aufweisenden photoelektronischen Positionsdetektor (11) zum Empfangen eines Lichtstrahls (L) von kleinem Durchmesser und zur Lieferung von die Lage des Lichtstrahlauftreffpunktes auf dem Meßfeld (10) kennzeichnenden elektrischen Positionssignalen, **dadurch gekennzeichnet,** daß der Positionsdetektor (11) starr an dem Distanzstück (12) befestigbar ist.

6. Tastvorrichtung nach Anspruch 5, **dadurch gekennzeichnet,** daß der Positionsdetektor (11) entlang des Distanzstückes (12) verstellbar ist.

7. Tastvorrichtung nach Anspruch 5 oder 6, **dadurch gekennzeichnet,** daß die Länge des Distanzstückes (12) veränderbar ist.

8. Tastvorrichtung nach einem der Ansprüche 5 bis 7, **dadurch gekennzeichnet,** daß die Einheit aus dem Distanzstück (12) und dem Positionsdetektor (11) mit einem Winkelmesser (15) zum Feststellen der Winkelposition des Meßfeldes (10) des Positionsdetektors (11) in einem raumfesten Koordinatensystem versehen ist.

9. Tastvorrichtung nach einem der Ansprüche 5 bis 8, **gekennzeichnet durch** eine Einrichtung zur drahtlosen Fernübertragung der aktuellen oder gespeicherten Positionssigale an einen ortsfesten Empfänger.

10. Tastvorrichtung nach einem der Ansprüche 5 bis 9, **gekennzeichnet durch** eine programmgesteuerte elektronische Bedienerführung.

11. Tastvorrichtung nach einem der Ansprüche 5 bis 10, **dadurch gekennzeichnet,** daß das Distanzstück (12) und der photoelektronische Positionsdetektor (11) mindestens im Bereich des Meßfeldes (10) transparent sind und in Richtung des Lichtstrahls (L) hinter ihnen eine Einrichtung zum Überwachen der Lage des Lichtstrahls (L) ortsfest angeordnet ist.

12. Tastvorrichtung nach einem der Ansprüche 5 bis 11, **gekennzeichnet durch** eine Einrichtung (14) zum zwangsweisen Führen in Krümmungsrichtung der Körperfläche (3a,5a) beim Verschieben entlang dieser und zum zwangsweisen Ausrichten des Distanzstückes (12) in solcher Weise, daß das Meßfeld (10) des daran befestigten Positionsdetektors (11) zur Krümmungsmittelachse der Körperfläche senkrecht ist.

13. Vorrichtung nach einem der Ansprüche 5 bis 12, **dadurch gekennzeichnet,** daß das Distanzstück (12) mit mindestens einem Haftmagneten an einer Gleitfläche (14a) versehen ist, der das Distanzstück (12) bei der Verschiebung entlang der Körperfläche (3a,5a) in Anlage an dem diese Körperfläche (3a, 5a) aufweisenden Körper (2) hält.

## Claims

1. Method for ascertaining the spacing, which the centre line of curvature of a concave body surface (3a, 5a), which is curved in the shape of a conical envelope and faces a free measurement space, has from a reference axis extending substantially parallelly thereto, in terms of magnitude and direction, in particular for ascertaining the spacing of the longitudinal centre line of the central opening (3) in a turbine impeller wheel rim (2) and/or the longitudinal centre line of the bearing surface (5a) of a turbine rotor bearing (5) from the reference axis and, in a given case, for ascertaining a possible deviation of the shape of the concave body surface from the exact conical envelope shape, wherein
a) the reference axis or an auxiliary axis, which displays a definable spatial position relative thereto and extends at least approximately parallelly to its direction, is represented by a light beam (L) of small diameter, in particular a laser beam, in the measurement space,
b) a biaxial photo-electronic position detector (11), which has a measurement field (10), is brought by means of a spacer member (12), which is supported in stable manner at the body surface (3a, 5a), into a measurement position, in which its measurement field (10) extends in a measurement plane which is substantially perpendicular to the centre line of curvature of the concave body surface (3a, 5a) and the light beam (L) is incident on the measurement field (10), and
c) the position detector (11) is rotated in the measurement position about an axis which is substantially parallel to the centre line of curvature of the body surface (3a, 5a),
characterised thereby, that
d) the position detector (11) is rigidly fastened at the spacer member (12) and this is displaced by the end supported at the body surface (3a, 5a) along this in its direction of curvature so that the position detector (11) with its measurement field (10) is constrainedly rotated about the centre line of curvature of the concave body surface (3a, 5a),
e) the electrical position signals, which are supplied by the position detector (11) and characteristic of the associated position of the point of incidence of the light beam on the measurement field (10) are detected in at least three different, mutually spaced rotary settings of the measurement field (10),
f) the angular position of the measurement field (10) in a space-bound co-ordinate system is ascertained for at least one of the rotary settings of the measurement field (10), in which the position signals are detected, and for the associated position signal, and
g) the spacing between the reference axis and the centre line of curvature is computed in terms of its magnitude and its direction with respect to the space-bound co-ordinate system from the position signals and the ascertained angular position or positions in the space-bound co-ordinate system as well as in a given case from the known position of the auxiliary axis relative to the reference axis on the basis that the point of incidence of the light beam describes a circular line, which is substantially concentric with the centre line of curvature of the concave body surface (3a, 5a), on the measurement field during the rotation of the position detector and of the measurement field.

2. Method according to claim 1, characterised thereby, that the computation of the spacing is performed by means of an electronic computer (C).

3. Method according to claim 1 or 2, characterised thereby, that the position signals are stored intermediately.

4. Method for the aligning of several concave body surfaces (3a, 5a), which are curved in the shape of a conical envelope, arranged at a spacing one behind the other and associated with a free measurement space, in particular the bearing surfaces (5a) of a turbine rotor and the wall surfaces (3a) of the central openings (3) in the impeller wheel rims (2) of the turbine, in such a manner that their centre lines of curvature are in alignment, with the use of the method according to one of the claims 1 to 3, characterised thereby, that for each surface (3a, 5a), the spacing of its centre line of curvature from a reference axis (L), which is represented in common for all surfaces (3a, 5a), is ascertained in terms of magnitude and direction, the spatial position of an alignment axis, which is common to all surfaces (3a, 5a) and into which the individual surfaces (3a, 5a) can be set by their centre line of curvature with least possible total displacement of all surfaces (3a, 5a), is computed from the ascertained spacings, it is computed and indicated for each surface (3a, 5a) how far and in which direction the associated body (2) must be displaced in space in order to set its centre line of curvature into line with the alignment axis, and the bodies (2) are set in accordance with the computed data.

5. Sensing device (7) with a rigid spacer member (12), which comprises means (13) for stable support against a concave body surface (3a, 5a), which is curved in conical shape, and a photo-electronic position detector (11), which is mounted at the spacer member (12) and has a biaxial measurement field (10), for the reception of a light beam (L) of small diameter and for the supply of electrical position signals characterising the position of the point of incidence of the light beam on the measurement field (10), characterised thereby, that the position detector (11) is rigidly fastened at the spacer member (12).

6. Sensing device according to claim 5, characterised thereby, that the position detector (11) is displaceable along the spacer member (12).

7. Sensing device according to claim 5 or 6, characterised thereby, that the length of the spacer member (12) is variable.

8. Sensing device according to one of the claims 5 to 7, characterised thereby, that the unit of the spacer member (12) and the position detector (11) is provided with a protractor (15) for ascertaining the angular position of the measurement field (10) of the position detector (11) in a space-bound co-ordinate system.

9. Sensing device according to one of the claims 5 to 8, characterised by an equipment for the wireless remote transmission of the actual or stored position signals to a receiver of fixed location.

10. Sensing device according to one of the claims 5 to 9, characterised by a program-controlled electronic operator control.

11. Sensing device according to one of the claims 5 to 10, characterised thereby, that the spacer member (12) and the photo-electronic position detector (11) are transparent at least in the region of the measurement field (10) and, behind them in the direction of the light beam (L), an equipment is arranged in fixed location for monitoring the position of the light beam (L).

12. Sensing device according to one of the claims 5 to 11, characterised by an equipment (14) for the constrained guidance in direction of the curvature of the body surface (3a, 5a) during the displacement along this and for the constrained alignment of the spacer member (12) in such a manner that the measurement field (10) of the position detector (11) fastened thereat is perpendicular to the centre line of curvature of the body surface.

13. Sensing device according to one of the claims 5 to 12, characterised thereby, that the spacer member (12) is provided with at least one adhesion magnet at a sliding surface (14a) which holds the spacer member (12) during the displacement along the body surface (3a, 5a) in contact with the body (2) displaying this body surface (3a, 5a).

## Revendications

1. Procédé pour déterminer en grandeur et en direction la distance qui existe entre l'axe central de courbure d'une surface concave (3a,5a) d'un corps, cintrée sous la forme d'une enveloppe conique et tournée vers un espace libre de mesure, et un axe de référence, qui est sensiblement parallèle à cette surface, notamment pour la détermination de la distance entre l'axe médian longitudinal d'une ouverture centrale (3) dans une couronne (2) d'aubes directrices d'une turbine et/ou l'axe médian longitudinal de la surface (5a) d'un palier (5) du rotor de turbine et l'axe de référence, et éventuellement pour déterminer un écart éventuel entre la forme de la surface concave d'un corps et la forme précise de l'enveloppe conique, et selon lequel
a) l'axe de référence ou un axe auxiliaire, qui possède une position spatiale pouvant être définie, par rapport à cet axe de référence et s'étend au moins approximativement parallèlement à la direction de cet axe de référence, est représenté dans l'espace de mesure par un rayon lumineux (L) possédant un faible diamètre, notamment un faisceau laser,
b) on amène un détecteur opto-électronique de position (11) à deux axes, qui possède un champ de mesure (10) au moyen d'une entretoise (12) qui prend appui, d'une manière protégée contre tout basculement, sur la surface (3a,5a) du corps, dans une position de mesure, dans laquelle son champ de mesure (10) s'étend dans un plan sensiblement perpendiculaire à l'axe médian de courbure de la surface concave du corps (3a,5a) et le rayon lumineux (L) rencontre le champ de mesure (10), et
c) on fait pivoter le détecteur de position (11), situé dans la position de mesure, autour d'un axe sensiblement parallèle à l'axe médian de courbure de la surface (3a, 5a) du corps,
caractérisé par le fait que
d) on fixe rigidement le détecteur de position (11) sur l'entretoise (12) et on déplace cette entretoise avec son extrémité prenant appui sur la surface (3a, 5a) du corps, dans sa direction de cintrage, le long de cette surface, de sorte que le champ de mesure (10) du détecteur de position (11) tourne obligatoirement autour de l'axe médian de courbure de la surface concave (3a, 5a) du corps,
e) on détecte les signaux électriques de position qui caractérisent la position associée du point d'impact du faisceau de lumière dans le champ de mesure (10), pour la position associée du point d'impact du faisceau de lumière, dans au moins trois positions en rotation du champ de mesure (10), qui sont situées à distance les unes des autres,
f) on fixe la position angulaire du champ de mesure (10) dans un système de coordonnées fixe dans l'espace, pour au moins l'une des trois positions en rotation du champ de mesure (10), dans lesquelles les signaux de position sont détectés, et pour le signal de position associé, et
g) dans l'hypothèse où le point d'impact du rayon lumineux décrit, lors de la rotation du détecteur de position et du champ de mesure sur ce détecteur, sensiblement une ligne circulaire concentrique à l'axe médian de courbure de la surface concave (3a, 5a) du corps, on détermine, à partir des signaux de position et/ou de la ou des positions angulaires fixées, dans le système de coordonnées fixe dans l'espace - ainsi que, éventuellement, à partir de la position connue de l'axe auxiliaire par rapport à l'axe de référence - la distance entre l'axe de référence et l'axe médian de courbure, et ce du point de vue grandeur et direction, par rapport au système de coordonnées fixe dans l'espace.

2. Procédé suivant la revendication 1, caractérisé par le fait que le calcul de la distance est réalisé au moyen d'un calculateur électronique (C).

3. Procédé suivant la revendication 1 ou 2, caractérisé par le fait que les signaux de position sont mémorisés temporairement.

4. Procédé pour aligner plusieurs surfaces concaves (3a, 5a) de corps, qui sont disposées à distance les unes derrière les autres, sont associées à un espace de mesure libre et sont cintrées avec une forme d'enveloppe conique, notamment les surfaces (5a) du palier d'un rotor de turbine et les parois (3a) des ouvertures centrales (3) ménagées dans les couronnes (2) d'aubes directrices de la turbine, de telle sorte que leurs axes médians de courbure sont alignés, moyennant l'utilisation du procédé suivant l'une des revendications 1 à 3, caractérisé par le fait que pour chaque surface (3a, 5a), on détermine, en grandeur et en direction, la distance entre son axe central de cintrage et un axe de référence (L) représenté conjointement pour toutes les surfaces (3a, 5a), qu'à partir des distances déterminées, on calcule la position spatiale d'un axe d'alignement commun à toutes les surfaces (3a, 5a), dans laquelle on peut régler les surfaces individuelles (3a, 5a) au moyen de leur axe central de courbure, pour le décalage global le plus faible possible de toutes les surfaces (3a, 5a), et pour chaque surface (3a, 5a) qu'on calcule et on affiche l'amplitude et la direction du déplacement sur lequel le corps (2) doit être déplacé dans l'espace, de manière à régler son axe médian de courbure de manière qu'il soit aligné avec l'axe d'alignement, et qu'on règle les corps (2) en fonction des données calculées.

5. Dispositif de palpage (7) comportant une entretoise rigide (12) comportant des moyens (13) pour son support, avec protection contre tout basculement, sur une surface concave (3a, 5a) d'un corps, cintrée avec une forme conique, et un détecteur opto-électronique de position (11), qui est monté sur cette entretoise et possède un champ de mesure (10) à deux axes, pour la réception d'un rayon lumineux (L) possédant un faible diamètre et la délivrance de signaux électriques de position, qui caractérisent la position du point d'impact du rayon lumineux sur le champ de mesure (10), caractérisé par le fait que le détecteur de position (11) peut être fixé de façon rigide sur l'entretoise (12).

6. Dispositif de palpage suivant la revendication 5, caractérisé par le fait que le détecteur de position (11) est déplaçable le long de l'entretoise (12).

7. Dispositif de palpage suivant la revendication 5 ou 6, caractérisé par le fait que la longueur de l'entretoise (12) est modifiable.

8. Dispositif de palpage suivant l'une des revendications 5 à 7, caractérisé par le fait que l'unité constituée par l'entretoise (12) et le détecteur de position (11) est équipée d'un goniomètre (15) servant à déterminer la position angulaire du champ de mesure (10) du détecteur de position (11) dans un système de coordonnées fixe dans l'espace.

9. Dispositif de palpage suivant l'une des revendications 5 à 8, caractérisé par un dispositif pour réaliser la télétransmission sans fil des signaux de position actuels ou mémorisés à un récepteur fixe.

10. Dispositif de palpage suivant l'une des revendications 5 à 9, caractérisé par un pilotage électronique, commandé par programme, de l'utilisateur.

11. Dispositif de palpage suivant l'une des revendications 5 à 10, caractérisé par le fait que l'entretoise (12) et le détecteur optoélectronique de position (11) sont transparents au moins dans la zone du champ de mesure (10) et le dispositif servant à contrôler la position du rayon lumineux (L) est monté fixe en arrière de l'entretoise et du détecteur, dans la direction du rayon lumineux (L).

12. Dispositif de palpage suivant l'une des revendications 5 à 11, caractérisé par un dispositif (14) pour le guidage forcé dans la direction de cintrage de la surface (3a, 5a) du corps lors du déplacement le long de cette surface et pour l'alignement forcé de l'entretoise (12) de telle sorte que le champ de mesure (10) du détecteur de position (11) fixé à l'entretoise, est perpendiculaire à l'axe médian de courbure de la surface du corps.

13. Dispositif suivant l'une des revendications 5 à 12, caractérisé par le fait que l'entretoise (12) comporte au moins un aimant adhérent et une surface de glissement (14a), et qui, lors du déplacement le long de la surface (3a, 5a) du corps, maintient l'entretoise (12) appliquée contre le corps (2) qui possède cette surface (3a, 5a).
